# EUROPÄISCHE PATENTSCHRIFT

(11) **EP 3 687 859 B1**
(45) Veröffentlichungstag und Bekanntmachung des Hinweises auf die Patenterteilung: **18.08.2021**
(21) Anmeldenummer: 18826533.4
(22) Anmeldetag: 11.12.2018
(51) Int. Cl.: B60Q 1/50

(54) **VERFAHREN ZUM AUSLEUCHTEN EINES FAHRBAHNBEREICHS DURCH PROJIZIEREN EINER TRAJEKTORIE SOWIE KRAFTFAHRZEUG**
METHOD FOR ILLUMINATING A ROAD AREA BY PROJECTING A TRAJECTORY, AND MOTOR VEHICLE
PROCÉDÉ DESTINÉ À ÉCLAIRER UNE ZONE DE CHAUSSÉE EN PROJETANT UNE TRAJECTOIRE ET VÉHICULE AUTOMOBILE

(30) Priorität: 20.12.2017 DE 102017223451
(43) Veröffentlichungstag der Anmeldung: 05.08.2020
(73) Patentinhaber: Audi AG, 85045 Ingolstadt (DE)
(72) Erfinder: REIM, Johannes, 85072 Eichstätt (DE); OMERBEGOVIC, Said, 60311 Frankfurt am Main (DE)
(86) Internationale Anmeldenummer: PCT/EP2018/084400
(87) Internationale Veröffentlichungsnummer: WO 2019/121175

(56) Entgegenhaltungen:
- EP-A1- 3 401 162
- EP-A2- 1 334 871
- DE-A1-102013 100 200
- DE-A1-102015 201 764
- GB-A- 2 517 790
- JP-A- 2016 101 797
- JP-A- 2017 144 995

## Beschreibung

Die Erfindung betrifft ein Verfahren zum Ausleuchten eines Fahrbahnbereichs durch ein Kraftfahrzeug. Dabei wird eine Trajektorie, welche eine zukünftige Bewegung des Kraftfahrzeugs auf einer Fahrbahn betrifft, auf die Fahrbahn projiziert. Ein zweiter Aspekt der Erfindung betrifft ein Kraftfahrzeug mit einer Beleuchtungseinrichtung.

Aus dem Stand der Technik sind hochauflösende Scheinwerfer bekannt, welche insbesondere zumindest 200, 500, 1000 oder 2000 Bildpunkte auflösen können. Derartige hochauflösende Scheinwerfer können zur Projektion von Bildern und Symbolen auf eine Fahrbahn genutzt werden. Ein solcher hochauflösender Scheinwerfer kann beispielsweise ein Matrixleuchtmittel, eine Anordnung von Mikrospiegeln, eine Anordnung von Flüssigkristallen oder einen Laserscanner aufweisen.

In einem Mischbetrieb von teilautonom oder vollautonom betriebenen Fahrzeugen mit durch einen Fahrer gesteuerten Fahrzeugen besteht ein hohes Gefahrenpotential durch unerkannte Fahrmanöver. Insbesondere können menschliche Fahrer das Verhalten von autonom gesteuerten Fahrzeugen oftmals nur schwer einschätzen.

In diesem Kontext offenbart die DE 10 2014 226 254 A1 ein Verfahren zum Betreiben einer Signalisierungsvorrichtung eines autonom oder teilautonom fahrenden Kraftfahrzeugs, wobei die Signalisierungsvorrichtung in Abhängigkeit von einem erfassten Verkehrsteilnehmer angesteuert wird, um dem erfassten Verkehrsteilnehmer eine Information über ein weiteres Verhalten des Kraftfahrzeugs und/oder des erfassten Verkehrsteilnehmers anzuzeigen. Wenigstens ein Signalisierungsmittel der Signalisierungsvorrichtung kann an einem Scheinwerfer des Kraftfahrzeugs angeordnet sein.

Die DE 10 2011 081 394 B3 betrifft ein Verfahren zum Hervorheben eines erwarteten Bewegungspfads eines Fahrzeugs, wobei das Verfahren einen Schritt des Ermittelns einer Verkehrssituation unter Verwendung einer Information über ein Umfeld des Fahrzeugs umfasst. Auf Basis der erfassten Verkehrssituation wird ein erwarteter Bewegungspfad durch eine Fahrbahnmarkierungsvorrichtung hervorgehoben. Beispielsweise kann ein Scheinwerfer des Fahrzeugs als die Fahrbahnmarkierungsvorrichtung angesteuert werden.

Die DE 10 2012 025 354 A1 betrifft eine Vorrichtung und ein Verfahren zur Anzeige einer Änderung eines Dynamikparameters eines Verkehrsmittels. Zur Anzeige wird eine vordefinierte Unregelmäßigkeit auf eine Oberfläche in der Umgebung des Verkehrsmittels projiziert. Die vordefinierte Unregelmäßigkeit wird durch ein Leuchtmittel, beispielsweise einen Frontscheinwerfer, auf die Oberfläche projiziert.

Die EP 1 334 871 A2 bettrift auch ein Verfahren und eine Vorrichtung zur Anzeige eines erwarteten Bewegungungspfads und einer Änderung eines Dynamikparameters eines Fahrzeugs.

Der Erfindung liegt die Aufgabe zugrunde, eine verbesserte Übersicht über die Fahrt eines Kraftfahrzeugs, insbesondere für weitere Verkehrsteilnehmer, zu ermöglichen.

Diese Aufgabe wird erfindungsgemäß gelöst durch die Gegenstände der unabhängigen Patentansprüche. Vorteilhafte Ausführungsformen mit zweckmäßigen Weiterbildungen sind Gegenstand der Unteransprüche.

Die Erfindung geht aus von einem Verfahren zum Ausleuchten eines Fahrbahnbereichs durch ein Kraftfahrzeug mit den folgenden Schritten: Ermitteln einer Trajektorie, welche eine zukünftige Bewegung des Kraftfahrzeugs auf einer Fahrbahn betrifft, Berechnen einer Lichtverteilung für einen Scheinwerfer des Kraftfahrzeugs in Abhängigkeit von der ermittelten Trajektorie derart, dass ein Verlauf der Trajektorie als Teil der Lichtverteilung auf die Fahrbahn projiziert wird, und Abstrahlen einer der Lichtverteilung entsprechenden Helligkeitsverteilung mittels des Scheinwerfers auf die Fahrbahn. In manchen Ausführungsformen der Erfindung kann die Trajektorie anhand einer Verkehrssituation, in welcher sich das Kraftfahrzeug befindet, ermittelt werden. Beispielsweise kann hierzu mit einer Umfeldsensorik des Kraftfahrzeugs, welche beispielsweise einen Radarsensor, einen Lidar-Sensor, eine Kamera und/oder einen Ultraschallsensor umfasst, die Verkehrssituation erfasst werden. Alternativ oder zusätzlich können Steuerbefehle des Fahrers oder einer Steuereinrichtung zum autonomen Betrieb des Fahrzeugs zum Ermitteln der Trajektorie erfasst werden. Durch die Steuerbefehle kann die zukünftige Bewegung des Kraftfahrzeugs auf der Fahrbahn fest vorgegeben sein. Beispielsweise wird durch die Steuerbefehle eine Lenkeinrichtung, eine Bremseinrichtung sowie eine Beschleunigungseinrichtung des Fahrzeugs durchgehend angesteuert. Mit anderen Worten kann anhand der Steuerbefehle abgeleitet werden, welche Lenkmanöver, Bremsmanöver und Beschleunigungsmanöver das Kraftfahrzeug während der zukünftigen Bewegung auf der Fahrbahn durchführen wird. Dabei betrifft die zukünftige Bewegung des Kraftfahrzeugs insbesondere eine Bewegung des Kraftfahrzeugs über zumindest fünf, zehn, 20 oder 50 Meter. Mit anderen Worten wird die zukünftige Bewegung vorteilhafterweise nicht nur aus einer momentanen Beschleunigung, Lenkung oder Verzögerung des Kraftfahrzeugs extrapoliert, sondern vorausschauend berechnet.

Um eine verbesserte Übersicht über die Bewegung des Kraftfahrzeugs zu ermöglichen, ist vorgesehen, dass die Lichtverteilung in Abhängigkeit von der ermittelten Trajektorie zusätzlich derart berechnet wird, dass anhand der Lichtverteilung zusätzlich zu der Trajektorie auch eine Beschleunigung des Kraftfahrzeugs parallel zu dessen Längsrichtung symbolisiert wird. Mit anderen Worten wird sowohl der Verlauf der Trajektorie als auch eine Geschwindigkeitsänderung des Kraftfahrzeugs durch die Lichtverteilung symbolisiert. Durch Projektion der Lichtverteilung auf die Fahrbahn wird somit durch die Projektion auf der Fahrbahn sowohl der Verlauf der Trajektorie als auch die Geschwindigkeitsänderung des Kraftfahrzeugs dargestellt.

Die Erfindung sieht vor, dass eine Helligkeit der Lichtverteilung entlang des Verlaufs der Trajektorie zunimmt, wenn eine Geschwindigkeit des Kraftfahrzeugs entlang des Verlaufs der Trajektorie zukünftig zunehmen wird und abnimmt, wenn die Geschwindigkeit des Kraftfahrzeugs entlang des Verlaufs der Trajektorie zukünftig abnehmen wird. Mit anderen Worten nimmt die Helligkeit der Lichtverteilung zu, wenn das Kraftfahrzeug zukünftig Gas gibt und ab, wenn das Kraftfahrzeug zukünftig bremst. Beispielsweise kann die Helligkeit der Lichtverteilung lokal entlang des Verlaufs der Trajektorie gegenüber einem Grundwert verringert werden, wenn die Geschwindigkeit des Kraftfahrzeugs zukünftig abnehmen wird, und erhöht werden, wenn die Geschwindigkeit des Kraftfahrzeugs zukünftig zunehmen wird. Dabei wird die Helligkeit der Lichtverteilung an der Stelle entlang des Verlaufs der Trajektorie angepasst, in welchem die Geschwindigkeitsänderung vorgenommen werden wird.Somit wird nicht nur dargestellt, dass sich die Geschwindigkeit des Kraftfahrzeugs ändert wird, sondern auch an welcher Stelle sich die Geschwindigkeit des Kraftfahrzeugs ändern wird.

Als Beschleunigung des Kraftfahrzeugs parallel zu dessen Längsrichtung ist sowohl eine positive Beschleunigung (Gas geben) als auch eine negative Beschleunigung (Abbremsen) zu verstehen. Somit ist unter Beschleunigung des Kraftfahrzeugs parallel zu dessen Längsrichtung sowohl eine Geschwindigkeitszunahme als auch eine Geschwindigkeitsabnahme zu verstehen.

Beispielsweise wird die Beschleunigung des Kraftfahrzeugs parallel zu dessen Längsrichtung durch ein Symbol repräsentiert, welches als Teil der Lichtverteilung auf die Fahrbahn projiziert wird. Hierfür kann insbesondere ein Symbol vorbestimmt werden, welches für Fahrer weiterer Kraftfahrzeuge besonders intuitiv verständlich ist. Das Symbol kann vorzugsweise repräsentieren, in welche Richtung die Beschleunigung des Kraftfahrzeugs parallel zu dessen Längsrichtung ausgerichtet ist und/oder wie stark diese Beschleunigung ist. Beispielsweise kann das Symbol repräsentieren, ob das Kraftfahrzeug Gas gibt oder abbremst. Auf diese Weise kann die Beschleunigung des Kraftfahrzeugs parallel zu dessen Längsrichtung besonders intuitiv verständlich symbolisiert werden.

Der Verlauf der Trajektorie kann mit einer Linie repräsentiert werden, welche dem Verlauf der Trajektorie nachempfunden ist und als Teil der Lichtverteilung auf die Fahrbahn projiziert wird. Dabei kann die Linie denjenigen Verlauf haben, den das Kraftfahrzeug im Rahmen einer zukünftigen Bewegung folgen wird. Durch das Darstellen der Trajektorie mittels einer Linie kann die zukünftige Bewegung des Kraftfahrzeugs besonders intuitiv verständlich visualisiert werden.

In einer Ausführungsform der Erfindung wird die Lichtverteilung derart berechnet, dass das Symbol neben der Linie auf die Fahrbahn projiziert wird. Mit anderen Worten ist in der Projektion der der Lichtverteilung entsprechenden Helligkeitsverteilung auf die Fahrbahn das Symbol, welches die Geschwindigkeitsänderung beziehungsweise Beschleunigung des Kraftfahrzeugs repräsentiert, neben der Linie, welche den Verlauf der Trajektorie repräsentiert, dargestellt. Auf diese Weise ist eine noch intuitiv verständlichere Darstellung der zukünftigen Bewegung des Kraftfahrzeugs möglich.

Eine Weiterbildung sieht vor, dass die Beschleunigung des Kraftfahrzeugs parallel zu dessen Längsrichtung durch mindestens einen Pfeil repräsentiert wird, welcher entsprechend einer Richtung der Beschleunigung ausgerichtet ist und als Teil der Lichtverteilung auf die Fahrbahn projiziert wird. Mit anderen Worten wird eine Geschwindigkeitsänderung des Kraftfahrzeugs durch den mindestens einen Pfeil repräsentiert, welcher entsprechend der Richtung der Geschwindigkeitsänderung ausgerichtet ist. Insbesondere ist der mindestens eine Pfeil in Fahrtrichtung ausgerichtet, um eine zukünftige Beschleunigung des Kraftfahrzeugs zu repräsentieren, und entgegen der Fahrtrichtung ausgerichtet, um ein zukünftiges Abbremsen des Kraftfahrzeugs zu repräsentieren. Der mindestens eine Pfeil kann Teil des oben genannten Symbols sein. Beispielsweise besteht das Symbol teilweise oder ausschließlich aus dem mindestens einen Pfeil. Durch den Pfeil kann die Beschleunigung des Kraftfahrzeugs parallel zu dessen Längsrichtung besonders intuitiv erkennbar kenntlich gemacht werden.

Der mindestens eine Pfeil/das Symbol wird vorzugsweise an diejenige Stelle im Verlauf der Trajektorie projiziert, an welcher das Kraftfahrzeug die Beschleunigung längs der Längsrichtung erfahren wird. Auf diese Weise kann durch das Symbol/den mindestens einen Pfeil nicht nur dargestellt werden, dass das Kraftfahrzeug parallel zu dessen Längsachse beschleunigt werden wird, sondern auch an welcher Stelle.

Eine Weiterbildung sieht vor, dass ein zukünftiges Anhalten des Kraftfahrzeugs durch eine Linie, insbesondere Haltelinie, repräsentiert wird, die senkrecht zur Trajektorie ausgerichtet ist und als Teil der Lichtverteilung auf die Fahrbahn projiziert wird. Unter dem zukünftigen Anhalten des Kraftfahrzeugs ist insbesondere zu verstehen, dass das Kraftfahrzeug im Rahmen seiner zukünftigen Bewegung bis zum Stillstand abbremst. In diesem Fall kann die Trajektorie in einem Haltepunkt, in dem das Kraftfahrzeug zum Stehen kommt, enden. In diesem Fall kann die weitere Linie, insbesondere die Haltelinie, senkrecht zur Trajektorie durch diesen Haltepunkt verlaufen. Im Allgemeinen kann die weitere Linie, insbesondere Haltelinie, in dieser Position dargestellt werden, in welcher das Kraftfahrzeug beim zukünftigen Anhalten zum Stehen kommt. Auf diese Weise kann für andere Verkehrsteilnehmer dargestellt werden, dass das Kraftfahrzeug zukünftig anhalten wird.

Bei dem Ermitteln der Trajektorie kann diese beispielsweise aus einem Fahrerassistenzsystem zum Steuern einer autonomen Fahrt empfangen werden. Ein solches Fahrerassistenzsystem berechnet üblicherweise durchgehend eine Trajektorie zum Steuern einer solchen autonomen Fahrt. In diesem Fall kann die Trajektorie durch das Fahrerassistenzsystem berechnet werden. Es ergibt sich der Vorteil, dass für andere Verkehrsteilnehmer kenntlich gemacht werden kann, auf welche Art und Weise das Fahrzeug zukünftig autonom bewegt wird.

Eine Weiterbildung sieht vor, dass die Beschleunigung des Kraftfahrzeugs parallel zu dessen Längsrichtung durch eine Animation einer zeitlich veränderbaren Helligkeitsverteilung, welche entsprechend der Lichtverteilung auf die Fahrbahn projiziert wird, entlang der Trajektorie repräsentiert wird. Beispielsweise wird mittels der zeitlich veränderbaren Helligkeitsverteilung eine Lichtquelle auf der Fahrbahn dargestellt. Die Animation der zeitlich veränderbaren Helligkeitsverteilung kann eine Bewegungsrichtung haben. Im Beispiel der Lichtquelle als der Animation kann eine Richtung einer Gruppengeschwindigkeit und/oder Phasengeschwindigkeit der Lichtquelle der Bewegungsrichtung entsprechen. Durch die zeitlich veränderbare Helligkeitsverteilung ergibt sich eine weitere besonders intuitive Möglichkeit, die Beschleunigung des Kraftfahrzeugs parallel zu dessen Längsrichtung darzustellen.

Zur Erfindung gehört außerdem ein Kraftfahrzeug mit einer Beleuchtungseinrichtung zum Ausleuchten eines Fahrbahnbereichs mit einer Ermittlungseinheit zum Ermitteln einer Trajektorie, welche eine zukünftige Bewegung des Kraftfahrzeugs auf einer Fahrbahn betrifft, einer Recheneinheit zum Berechnen einer Lichtverteilung für einen Scheinwerfer des Kraftfahrzeugs in Abhängigkeit von der ermittelten Trajektorie, derart, dass ein Verlauf der Trajektorie als Teil der Lichtverteilung auf die Fahrbahn projiziert wird, und einer Steuereinheit zum Ansteuern des Scheinwerfers derart, dass dieser eine der Lichtverteilung entsprechende Helligkeitsverteilung abstrahlt. Erfindungsgemäß ist die Recheneinheit dazu ausgebildet, die Lichtverteilung in Abhängigkeit von der ermittelten Trajektorie zusätzlich derart zu berechnen, dass anhand der Lichtverteilung zusätzlich zu der Trajektorie auch eine Beschleunigung des Kraftfahrzeugs parallel zu dessen Längsausrichtung symbolisiert ist. Erfindungsgemäß ist das Kraftfahrzeug so ausgebildet, dass eine Helligkeit der Lichtverteilung entlang des Verlaufs der Trajektorie zunimmt, wenn eine Geschwindigkeit des Kraftfahrzeugs entlang des Verlaufs der Trajektorie zukünftig zunehmen wird und abnimmt, wenn die Geschwindigkeit des Kraftfahrzeugs entlang des Verlaufs der Trajektorie zukünftig abnehmen wird.

Der Scheinwerfer ist bevorzugt als hochauflösender Scheinwerfer ausgeführt. Der Scheinwerfer kann beispielsweise ein Matrixleuchtmittel, eine Anordnung von Mikrospiegeln, eine Anordnung von Flüssigkristallen oder einen Laserscanner aufweisen.

Bei dem Kraftfahrzeug handelt es sich insbesondere um einen Kraftwagen, beispielsweise einen Personenkraftwagen oder einen Lastkraftwagen. Das Kraftfahrzeug kann zum Antrieb einen Verbrennungsmotor und/oder einen Elektromotor aufweisen. Insbesondere ist das Kraftfahrzeug dazu eingerichtet, eine vollständig oder teilweise autonome Fahrt durchzuführen. Hierzu kann das Kraftfahrzeug ein Fahrerassistenzsystem zum Steuern einer autonomen Fahrt des Fahrzeugs aufweisen. Insbesondere ist die Ermittlungseinheit dazu ausgebildet, die Trajektorie aus dem Fahrerassistenzsystem zu empfangen.

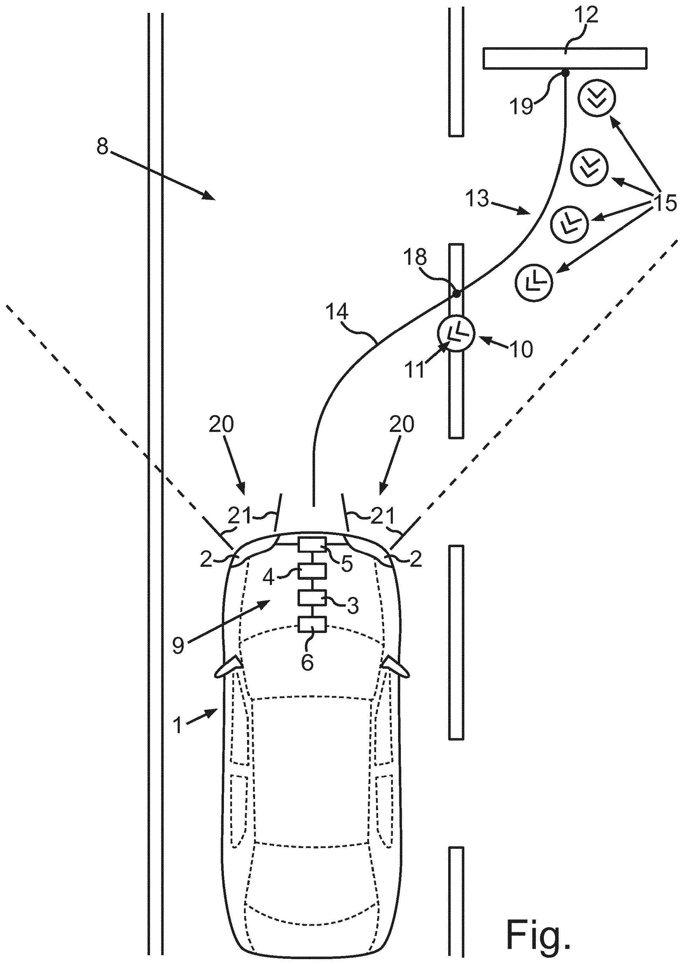

Im Folgenden sind Ausführungsbeispiele der Erfindung beschrieben. Hierzu zeigt die einzige Fig. in einer schematischen Vogelperspektive ein Kraftfahrzeug, dessen zukünftige Bewegung auf eine Fahrbahn projiziert wird.

Bei den im Folgenden erläuterten Ausführungsbeispielen handelt es sich um bevorzugte Ausführungsformen der Erfindung.

In den Figuren sind funktionsgleiche Elemente jeweils mit denselben Bezugszeichen versehen.

Die einzige Figur zeigt ein Kraftfahrzeug 1 mit einer Beleuchtungseinrichtung 9 zum Ausleuchten eines Fahrbahnbereichs einer Fahrbahn 8. Die Beleuchtungseinrichtung 9 umfasst zwei Scheinwerfer 2, welche in einem jeweiligen Abstrahlbereich 21 eine Helligkeitsverteilung 20 abstrahlen. Außerdem umfasst die Beleuchtungseinrichtung 9 vorliegend eine Ermittlungseinheit 3, eine Recheneinheit 4 und eine Steuereinheit 5. Die Steuereinheit 5 ist dazu ausgebildet, die Helligkeitsverteilung 20 der Scheinwerfer 2 zu steuern.

Die Ermittlungseinheit 3 ermittelt eine Trajektorie, welche eine zukünftige Bewegung des Kraftfahrzeugs 1 auf der Fahrbahn 8 betrifft. Insbesondere ist durch die Trajektorie die zukünftige Bewegung des Kraftfahrzeugs 1 auf der Fahrbahn 8 über eine Strecke von zumindest fünf Metern, zehn Metern, 20 Metern, 50 Metern oder 100 Metern eindeutig vorgegeben. Durch die Trajektorie kann eine Abfolge an Lenkmanövern und Beschleunigungsmanövern für das Kraftfahrzeug 1 fest vorgegeben sein. Beispielsweise kann die Trajektorie aus einer Verkehrssituation auf der Fahrbahn 8 und/oder anhand von Steuerbefehlen eines Fahrers des Kraftfahrzeugs 1 ermittelt werden. Vorliegend ist das Kraftfahrzeug 1 jedoch zur Durchführung einer autonomen Fahrt ausgebildet. Im Rahmen der autonomen Fahrt kann das Kraftfahrzeug 1 sich selbst steuern, ohne dass der Fahrer des Kraftfahrzeugs 1 eingreift. In diesem Fall hat das Kraftfahrzeug 1 beispielsweise keinen Fahrer, sondern nur Insassen. Alternativ könnte das Kraftfahrzeug 1 auch leer sein. Zum Steuern der autonomen Fahrt weist das Kraftfahrzeug 1 ein Fahrerassistenzsystem 6 auf. Das Fahrerassistenzsystem 6 ist dazu ausgebildet, die autonome Fahrt des Kraftfahrzeugs 1 zu steuern. Zum Steuern der autonomen Fahrt wird durch das Fahrerassistenzsystem 6 die Trajektorie, welche die zukünftige Bewegung des Kraftfahrzeugs 1 auf der Fahrbahn 8 betrifft, berechnet. Diese Trajektorie wird durch die Ermittlungseinheit 3 aus dem Fahrerassistenzsystem 6 empfangen.

Die Recheneinheit 4 berechnet anhand der Trajektorie eine jeweilige Lichtverteilung für jeden der Scheinwerfer 2 des Kraftfahrzeugs 1. Dabei wird die jeweilige Lichtverteilung derart berechnet, dass ein Verlauf 13 der Trajektorie als Teil der Lichtverteilung auf die Fahrbahn 8 projiziert wird. Gemäß der Figur wird die Trajektorie durch eine Linie 14 repräsentiert. Mit anderen Worten fährt das Kraftfahrzeug 1 im Rahmen seiner autonomen Fahrt im vorliegenden Beispiel der Linie 14 entlang.

Die Scheinwerfer 2 sind als hochauflösende Scheinwerfer ausgeführt. Die Scheinwerfer 2 können beispielsweise jeweils ein Matrixleuchtmittel, eine Anordnung von Mikrospiegeln, eine Anordnung von Flüssigkristallen oder einen Laserscanner aufweisen.

Im vorliegenden Beispiel wird sich das Kraftfahrzeug 1 gemäß der ermittelten Trajektorie bis zu dem Punkt 18 entlang der Linie 14 mit konstanter Geschwindigkeit fortbewegen. Ab dem Punkt 18 wird das Kraftfahrzeug 1 seine Geschwindigkeit verringern, das heißt bremsen, und somit mit geringer werdender Geschwindigkeit weiterhin der Linie 14 folgen. Infolge des Bremsmanövers ist geplant, dass das Kraftfahrzeug 1 in einem Punkt 19 zum Stehen kommt. Die beiden Punkte 18, 19 charakterisieren im Allgemeinen einen Abschnitt der Trajektorie, in welchem eine Beschleunigung des Kraftfahrzeugs 1 parallel zu dessen Fahrzeuglängsrichtung geplant ist. Mit anderen Worten charakterisiert der Punkt 18 einen Punkt, in dem ein Beschleunigungsmanöver begonnen wird und der Punkt 19 einen Punkt, in dem das Beschleunigungsmanöver beendet wird. Wie bereits dargelegt, ist unter dem Begriff "Beschleunigungsmanöver" sowohl ein Abbremsen als auch ein Gasgeben zu verstehen.

Die Recheneinheit 4 berechnet die Lichtverteilung für die Scheinwerfer 2 derart, dass einerseits die Linie 14 als auch ein Symbol 10 sowie eine Haltelinie 12 als Teil der Lichtverteilung auf die Fahrbahn 8 projiziert werden. Mit anderen Worten berechnet die Recheneinheit, welche Helligkeitsverteilung 20 durch die Scheinwerfer 2 abgestrahlt werden muss, damit die Linie 14, das Symbol 10 sowie die Haltelinie 12 auf der Fahrbahn 8 dargestellt werden. Somit handelt es sich bei der Lichtverteilung um eine Rechengröße, welche berechnet wird, um damit die Scheinwerfer 2 anzusteuern. Die Steuereinheit 5 steuert anhand dieser berechneten Lichtverteilung die Scheinwerfer 2 derart an, dass jeder der Scheinwerfer 2 eine der jeweiligen Lichtverteilung entsprechende Helligkeitsverteilung 20 abstrahlt.

Somit werden mit der Helligkeitsverteilung 20 das Symbol 10, die Linie 14 sowie die Haltelinie 12 auf der Fahrbahn 8 dargestellt.

Das Symbol 10 umfasst mindestens einen Pfeil 11, vorliegend zwei Pfeile 11. Der mindestens eine Pfeil 11 kann entsprechend einem Vektor einer Beschleunigung des Kraftfahrzeugs 1 parallel zu dessen Längsrichtung ausgerichtet sein. Die Beschleunigung des Kraftfahrzeugs 1 parallel zu dessen Längsrichtung kann beispielsweise durch Bremsen oder durch Gasgeben hervorgerufen werden. Mit anderen Worten kann entweder die Geschwindigkeit des Kraftfahrzeugs 1 erhöht oder verringert werden. Vorliegend wird ab dem Punkt 18 die Geschwindigkeit des Kraftfahrzeugs 1 verringert. Daher ist vorliegend der mindestens eine Pfeil 11 entgegen dem Verlauf 13 der Trajektorie ausgerichtet. In einem anderen Beispiel, in welchem das Kraftfahrzeug 1 seine Geschwindigkeit erhöht, kann der mindestens eine Pfeil 11 entsprechend dem Verlauf 13 der Trajektorie ausgerichtet sein.

Vorteilhafterweise ist das Symbol 10 beziehungsweise der mindestens eine Pfeil 11 dort angeordnet, wo das Kraftfahrzeug 1 mit der Geschwindigkeitsänderung beziehungsweise Beschleunigung parallel zur Fahrtrichtung beginnen wird. Alternativ oder zusätzlich kann über den Teil des Verlaufs 13 der Trajektorie, über welchen die Beschleunigung parallel zur Fahrtrichtung vorgesehen ist, weitere Symbole 15 dargestellt werden. Diese weiteren Symbole 15 können beispielsweise dem Symbol 10 nachempfunden sein. Vorliegend sind die Symbole 15 jedoch kleiner als das Symbol 10. Vorliegend werden die weiteren Symbole 15 entlang dem Verlauf 13 der Trajektorie zwischen den Punkten 18 und 19 dargestellt, da zwischen diesen beiden Punkten 18, 19 das Bremsmanöver vorgesehen ist.

Die Tatsache, dass das Kraftfahrzeug 1 voraussichtlich in dem Punkt 19 zum Stehen kommt, wird durch die Haltelinie 12 repräsentiert. Die Haltelinie 12 ist senkrecht zum Verlauf 13 der Trajektorie im Punkt 19 ausgerichtet. Durch die Darstellung der Haltelinie 12 kann für andere Verkehrsteilnehmer dargestellt werden, dass das Kraftfahrzeug 1 voraussichtlich in dem Punkt 19 zum Stehen kommt.

In weiteren, in der Figur nicht gezeigten Ausführungsformen der Erfindung kann vorgesehen sein, dass statt dem Symbol 10, den Pfeilen 11 und/oder den weiteren Symbolen 15 entweder eine zeitlich veränderbare Helligkeitsverteilung zwischen den Punkten 18 und 19 dargestellt wird oder dass eine Helligkeit der Helligkeitsverteilung 20 entlang des Verlaufs 13 der Trajektorie zwischen den Punkten 18 und 19 erhöht oder verringert wird.

Erfindungsgemäß repräsentiert eine Helligkeit der Lichtverteilung in einem Bereich lokal um den Verlauf 13 eine Geschwindigkeit des Kraftfahrzeugs 1, welche in dem jeweiligen Punkt vorgesehen ist. Eine Erhöhung der Geschwindigkeit kann wird in diesem Fall durch eine heller werdende Helligkeitsverteilung 20 entlang des Verlaufs 13 dargestellt. Eine Verringerung der Geschwindigkeit wird durch ein Dunklerwerden der Helligkeitsverteilung entlang dem Verlauf 13 dargestellt.

Insgesamt zeigen die Ausführungsbeispiele, wie eine verbesserte Übersicht über eine zukünftige Bewegung eines Kraftfahrzeugs, insbesondere für weitere Verkehrsteilnehmer, ermöglicht werden kann.

## Patentansprüche

1. Verfahren zum Ausleuchten eines Fahrbahnbereichs durch ein Kraftfahrzeug (1), mit den Schritten:
- Ermitteln einer Trajektorie, welche eine zukünftige Bewegung des Kraftfahrzeugs (1) auf einer Fahrbahn (8) betrifft,
- Berechnen einer Lichtverteilung für einen Scheinwerfer (2) des Kraftfahrzeugs (1) in Abhängigkeit von der ermittelten Trajektorie, derart, dass ein Verlauf (13) der Trajektorie als Teil der Lichtverteilung auf die Fahrbahn (8) projiziert wird, und
- Abstrahlen einer der Lichtverteilung entsprechenden Helligkeitsverteilung (20) mittels des Scheinwerfers (2) auf die Fahrbahn (8), wobei
- die Lichtverteilung in Abhängigkeit von der ermittelten Trajektorie zusätzlich derart berechnet wird, dass anhand der Lichtverteilung zusätzlich zu der Trajektorie auch eine Beschleunigung des Kraftfahrzeugs (1) parallel zu dessen Längsrichtung symbolisiert wird,
**dadurch gekennzeichnet, dass**
eine Helligkeit der Lichtverteilung entlang des Verlaufs (13) der Trajektorie zunimmt, wenn eine Geschwindigkeit des Kraftfahrzeugs (1) entlang des Verlaufs (13) der Trajektorie zukünftig zunehmen wird, und abnimmt, wenn die Geschwindigkeit des Kraftfahrzeugs (1) entlang des Verlaufs (13) der Trajektorie zukünftig abnehmen wird.

2. Verfahren nach Anspruch 1,
**dadurch gekennzeichnet, dass**
die Beschleunigung des Kraftfahrzeugs (1) parallel zu dessen Längsrichtung durch ein Symbol (10) repräsentiert wird, welches als Teil der Lichtverteilung auf die Fahrbahn (8) projiziert wird.

3. Verfahren nach einem der vorhergehenden Ansprüche,
**dadurch gekennzeichnet, dass**
der Verlauf (13) der Trajektorie durch eine Linie (14) repräsentiert wird, welche dem Verlauf (13) der Trajektorie nachempfunden ist und als Teil der Lichtverteilung auf die Fahrbahn (8) projiziert wird.

4. Verfahren nach Anspruch 2 und 3,
**dadurch gekennzeichnet, dass**
die Lichtverteilung derart berechnet wird, dass das Symbol (10) neben der Linie (14) auf die Fahrbahn (8) projiziert wird.

5. Verfahren nach einem der vorhergehenden Ansprüche,
**dadurch gekennzeichnet, dass**
die Beschleunigung des Kraftfahrzeugs (1) parallel zu dessen Längsrichtung durch mindestens einen Pfeil (11) repräsentiert wird, welcher entsprechend einer Richtung der Beschleunigung ausgerichtet ist und als Teil der Lichtverteilung auf die Fahrbahn (8) projiziert wird.

6. Verfahren nach einem der vorhergehenden Ansprüche,
**dadurch gekennzeichnet, dass**
ein zukünftiges Anhalten des Kraftfahrzeugs (1) durch eine weitere Linie, insbesondere Haltelinie (12), repräsentiert wird, die senkrecht zum Verlauf (13) der Trajektorie ausgerichtet ist und als Teil der Lichtverteilung auf die Fahrbahn (8) projiziert wird.

7. Verfahren nach einem der vorhergehenden Ansprüche,
**dadurch gekennzeichnet, dass**
beim Ermitteln der Trajektorie diese aus einem Fahrerassistenzsystem (6) zum Steuern einer autonomen Fahrt empfangen wird.

8. Verfahren nach einem der vorhergehenden Ansprüche,
**dadurch gekennzeichnet, dass**
die Beschleunigung des Kraftfahrzeugs (1) parallel zu dessen Längsrichtung durch eine Animation einer zeitlich veränderbaren Helligkeitsverteilung (20), welche entsprechend der Lichtverteilung auf die Fahrbahn (8) projiziert wird, entlang der Trajektorie repräsentiert wird.

9. Kraftfahrzeug (1) mit einer Beleuchtungseinrichtung (9) zum Ausleuchten eines Fahrbahnbereichs, mit
- einer Ermittlungseinheit (3) zum Ermitteln einer Trajektorie, welche eine zukünftige Bewegung des Kraftfahrzeugs (1) auf einer Fahrbahn (8) betrifft,
- einer Recheneinheit (4) zum Berechnen einer Lichtverteilung für einen Scheinwerfer (2) des Kraftfahrzeugs (1) in Abhängigkeit von der ermittelten Trajektorie, derart, dass ein Verlauf (13) der Trajektorie als Teil der Lichtverteilung auf die Fahrbahn (8) projiziert wird, und
- einer Steuereinheit (5) zum Ansteuern des Scheinwerfers derart, dass dieser eine der Lichtverteilung entsprechende Helligkeitsverteilung (20) abstrahlt, wobei
- die Recheneinheit (4) ausgebildet ist, die Lichtverteilung in Abhängigkeit von der ermittelten Trajektorie zusätzlich derart zu berechnen, dass anhand der Lichtverteilung zusätzlich zu der Trajektorie auch eine Beschleunigung des Kraftfahrzeugs (1) parallel zu dessen Längsrichtung symbolisiert ist,
**dadurch gekennzeichnet, dass**
- das Kraftfahrzeug (1) dazu ausgebildet ist, die Lichtverteilung so darzustellen, dass eine Helligkeit der Lichtverteilung entlang des Verlaufs (13) der Trajektorie zunimmt, wenn eine Geschwindigkeit des Kraftfahrzeugs (1) entlang des Verlaufs (13) der Trajektorie zukünftig zunehmen wird, und abnimmt, wenn die Geschwindigkeit des Kraftfahrzeugs (1) entlang des Verlaufs (13) der Trajektorie zukünftig abnehmen wird.

## Claims

1. Method for illuminating a road area on the part of a motor vehicle (1), having the steps:
- determining a trajectory which relates to a future movement of the motor vehicle (1) on a road (8),
- calculating a light distribution for a headlamp (2) of the motor vehicle (1) depending on the determined trajectory, such that a course (13) of the trajectory is projected onto the road (8) as a part of the light distribution, and
- radiating a brightness distribution (20), corresponding to the light distribution, by means of the headlamp (2) onto the road (8), wherein
- the light distribution depending on the determined trajectory is additionally calculated such that on the basis of the light distribution in addition to the trajectory also an acceleration of the motor vehicle (1) parallel to its longitudinal direction is symbolised,
**characterised in that**
a brightness of the light distribution along the course (13) of the trajectory increases when a speed of the motor vehicle (1) along the course (13) of the trajectory will in future increase, and reduces when the speed of the motor vehicle (1) along the course (13) of the trajectory will in future decrease.

2. Method according to claim 1,
**characterised in that**
the acceleration of the motor vehicle (1) parallel to its longitudinal direction is represented by a symbol (10) which is projected onto the road (8) as part of the light distribution.

3. Method according to any of the preceding claims,
**characterised in that**
the course (13) of the trajectory is represented by a line (14) which is modelled on the course (13) of the trajectory and is projected onto the road (8) as part of the light distribution.

4. Method according to claims 2 and 3
**characterised in that**
the light distribution is calculated such that the symbol (10) is projected next to the line (14) onto the road (8).

5. Method according to any of the preceding claims,
**characterised in that**
the acceleration of the motor vehicle (1) parallel to its longitudinal direction is represented by at least one arrow (11) which is aligned corresponding to a direction of the acceleration and is projected onto the road (8) as part of the light distribution.

6. Method according to any of the preceding claims,
**characterised in that**
a future stopping of the motor vehicle (1) is represented by a further line, in particular stop line (12), which is aligned perpendicularly to the course (13) of the trajectory, and is projected onto the road (8) as part of the light distribution.

7. Method according to any of the preceding claims,
**characterised in that**
when determining the trajectory, said trajectory is received from a driver assistance system (6) for controlling an autonomous journey.

8. Method according to any of the preceding claims,
**characterised in that**
the acceleration of the motor vehicle (1) parallel to its longitudinal direction is represented along the trajectory by means of an animation of a time variable brightness distribution (20) which is projected onto the road (8) corresponding to the light distribution.

9. Motor vehicle (1) having an illumination device (9) for illuminating a road area, having
- a determining unit (3) for determining a trajectory which relates to a future movement of the motor vehicle (1) on a road (8),
- a calculating unit (4) for calculating a light distribution for a headlamp (2) of the motor vehicle (1) depending on the determined trajectory, such that a course (13) of the trajectory is projected onto the road (8) as a part of the light distribution, and
- a control unit (5) for controlling the headlamp such that this radiates a brightness distribution (20) corresponding to the light distribution, wherein
- the calculating unit (4) is configured to calculate the light distribution depending on the determined trajectory such that on the basis of the light distribution, in addition to the trajectory, also an acceleration of the motor vehicle (1) parallel to its longitudinal direction is symbolised,
**characterised in that**
- the motor vehicle (1) is configured to represent the light distribution such that a brightness of the light distribution along the course (13) of the trajectory increases, when a speed of the motor vehicle (1) along the course (13) of the trajectory will in future increase, and reduces when the speed of the motor vehicle (1) along the course (13) of the trajectory will in future decrease.

## Revendications

1. Procédé d'éclairage d'une zone de chaussée par un véhicule automobile (1), avec les étapes consistant à :
- déterminer une trajectoire, laquelle est relative à un mouvement futur du véhicule automobile (1) sur une chaussée (8),
- calculer une répartition de lumière pour un phare (2) du véhicule automobile (1) en fonction de la trajectoire déterminée, de sorte qu'un parcours (13) de la trajectoire est projeté sur la chaussée (8) en tant que partie de la répartition de lumière, et
- projeter une répartition de luminosité (20) correspondant à la répartition de lumière sur la chaussée (8) au moyen du phare (2), dans lequel
- la répartition de lumière est calculée en fonction de la trajectoire déterminée de sorte que, à l'aide de la répartition de lumière, en plus de la trajectoire, une accélération du véhicule automobile (1) parallèlement à sa direction longitudinale est également symbolisée,
**caractérisé en ce qu'**
une luminosité de la répartition de lumière le long du parcours (13) de la trajectoire augmente lorsqu'une vitesse du véhicule automobile (1) le long du parcours (13) de la trajectoire augmente dans le futur, et diminue lorsque la vitesse du véhicule automobile (1) le long du parcours (13) de la trajectoire diminue dans le futur.

2. Procédé selon la revendication 1,
**caractérisé en ce que**
l'accélération du véhicule automobile (1) parallèlement à sa direction longitudinale est représentée par un symbole (10), lequel est projeté sur la chaussée (8) en tant que partie de la répartition de lumière.

3. Procédé selon l'une quelconque des revendications précédentes,
**caractérisé en ce que**
le parcours (13) de la trajectoire est représenté par une ligne (14), laquelle est modélisée sur le parcours (13) de la trajectoire et est projetée sur la chaussée (8) en tant que partie de la répartition de lumière.

4. Procédé selon la revendication 2 et 3,
**caractérisé en ce que**
la répartition de lumière est calculée de sorte que le symbole (10) est projeté sur la chaussée (8) à côté de la ligne (14).

5. Procédé selon l'une quelconque des revendications précédentes,
**caractérisé en ce que**
l'accélération du véhicule automobile (1) parallèlement à sa direction longitudinale est représentée par au moins une flèche (11), laquelle est orientée selon une direction de l'accélération et est projetée sur la chaussée (8) en tant que partie de la répartition de lumière.

6. Procédé selon l'une quelconque des revendications précédentes,
**caractérisé en ce qu'**
un arrêt futur du véhicule automobile (1) est représenté par une ligne supplémentaire, en particulier une ligne d'arrêt (12), qui est orientée perpendiculairement au parcours (13) de la trajectoire et est projetée sur la chaussée (8) en tant que partie de la répartition de lumière.

7. Procédé selon l'une quelconque des revendications précédentes,
**caractérisé en ce que**
lors de la détermination de la trajectoire, la trajectoire est reçue d'un système d'assistance au conducteur (6) pour commander une conduite autonome.

8. Procédé selon l'une quelconque des revendications précédentes,
**caractérisé en ce que**
l'accélération du véhicule automobile (1) parallèlement à sa direction longitudinale est représentée le long de la trajectoire par une animation d'une répartition de luminosité variable dans le temps (20), laquelle est projetée sur la chaussée (8) selon la répartition de lumière.

9. Véhicule automobile (1) avec un dispositif d'éclairage (9) pour éclairer une zone de chaussée, avec
- une unité de détermination (3) pour déterminer une trajectoire, laquelle est relative à un mouvement futur du véhicule automobile (1) sur une chaussée (8),
- une unité de calcul (4) pour calculer une répartition de lumière pour un phare (2) du véhicule automobile (1) en fonction de la trajectoire déterminée, de sorte qu'un parcours (13) de la trajectoire est projeté sur la chaussée (8) en tant que partie de la répartition de lumière, et
- une unité de commande (5) pour commander le phare de sorte que ce celui-ci émette une répartition de luminosité (20) correspondant à la répartition de lumière, dans lequel
- l'unité de calcul (4) est conçue pour calculer la répartition de lumière en fonction de la trajectoire déterminée de sorte que, à l'aide de la répartition de lumière, en plus de la trajectoire, une accélération du véhicule automobile (1) parallèlement à sa direction longitudinale est également symbolisée,
**caractérisé en ce que**
- le véhicule automobile (1) est conçu de sorte qu'une luminosité de la répartition de lumière le long du parcours (13) de la trajectoire augmente lorsqu'une vitesse du véhicule automobile (1) le long du parcours (13) de la trajectoire augmente dans le futur, et diminue lorsque la vitesse du véhicule automobile (1) le long du parcours (13) de la trajectoire diminue dans le futur.
